# EUROPÄISCHE PATENTSCHRIFT

(11) **EP 4 014 467 B1**
(45) Veröffentlichungstag und Bekanntmachung des Hinweises auf die Patenterteilung: **10.04.2024**
(21) Anmeldenummer: 20789457.7
(22) Anmeldetag: 22.09.2020
(51) Int. Cl.: G05B 19/418, H04L 9/40

(54) **DATENNETZWERK MIT ONE-WAY-GATEWAY**
DATA NETWORK HAVING A ONE-WAY GATEWAY
RÉSEAU DE DONNÉES AYANT UNE PASSERELLE UNIDIRECTIONNELLE

(30) Priorität: 10.10.2019 DE 102019215565
(43) Veröffentlichungstag der Anmeldung: 22.06.2022
(73) Patentinhaber: Siemens Mobility GmbH, 81739 München (DE)
(72) Erfinder: FALK, Rainer, 85586 Poing (DE); SELTZSAM, Stefan, 85653 Aying (DE); SEUSCHEK, Hermann, 81373 München (DE); WIMMER, Martin, 85579 Neubiberg (DE)
(74) Vertreter: Siemens Patent Attorneys
(86) Internationale Anmeldenummer: PCT/EP2020/076431
(87) Internationale Veröffentlichungsnummer: WO 2021/069207

(56) Entgegenhaltungen:
- EP-A1- 3 425 865
- WO-A1-2014/029958
- FREITAS MIGUEL BORGES DE ET AL: "SDN-Enabled Virtual Data Diode", 31. Januar 2019 (2019-01-31), ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 102 - 118, XP047502234, ISBN: 978-3-319-10403-4 [gefunden am 2019-01-31] Zusammenfassung

## Beschreibung

### HINTERGRUND DER ERFINDUNG

### Gebiet der Erfindung

Die vorliegende Erfindung betrifft ein Datennetzwerk für industrielle Anlagen und ein Verfahren für den Betrieb eines Datennetzwerks für industrielle Anlagen.

### Beschreibung des Stands der Technik

Daten aus Industrieanlagen sollen zur Analyse geschützt an ein Internet of Things (IoT) Edge-System oder ein IoT-Backend übertragen werden. Die Daten können beispielsweise ausgewertet werden, um zukünftige Defekte rechtzeitig zu erkennen (Predictive Maintenance), um Maschinenparameter zu optimieren oder um Angriffe auf ein Automatisierungssystem oder Manipulationen der Industrieanlage zu erkennen (Intrusion Detection System, System Integrity Monitoring).

Eine wesentliche Sicherheitsanforderung ist, die Datenübertragung selbst zu schützen. Dazu können sichere Kommunikationsprotokolle, wie z.B. TLS, DTLS, IPsec/IKEv2 verwendet werden. Eine weitere wesentliche Sicherheitsanforderung besteht darin, dass ein Automatisierungsnetzwerk (Steuerungsnetzwerk) nicht von außen angegriffen oder beeinflusst werden kann. Dies ist insbesondere wichtig, da manche Automatisierungsnetzwerke spezielle Echtzeit- und Safety-Anforderungen erfüllen müssen, und da in manchen Automatisierungsnetzwerken Altgeräte (Brownfield) mit unzureichendem Zugriffschutz verwendet werden.

Ein Ein-Weg-Gateway (Data Capture Unit, One-Way Gateway, Datendiode) ermöglicht dabei eine rückwirkungsfreie Anbindung eines Automatisierungsnetzwerks. Dadurch wird gewährleistet, dass nur Daten aus der Industrieanlage heraus übertragen werden können. Es wird verlässlich verhindert, dass von einem externen Netzwerk der Betrieb der Industrieanlage beeinflusst oder beeinträchtigt werden kann.

In komplexen Industrieanlagen sind üblicherweise mehrere separate Netzwerkzonen/ Automatisierungsnetzwerkzonen vorgesehen (z.B. jeweils eine je Fertigungszelle, je Produktionsstraße, je Maschine). Diese sind z.B. über eine industrielle Firewall, die Netzwerkverkehr filtert, mit einem Fabriknetzwerk verbunden. Dadurch ist jedoch an der Fabriknetzwerk-Firewall die Kommunikation innerhalb einer Netzwerkzone/Zelle nicht sichtbar. Wenn die Kommunikation innerhalb einer Netzwerkzone/Zelle überwacht werden soll, z.B. um Angriffe durch ein Intrusion Detection System (IDS) erkennen zu können, muss an jeder Zelle jeweils ein One-Way-Gateway installiert und betrieben werden. Dies ist äußerst aufwendig (Installation und Betrieb) und damit teuer.

EP 3 425 865 A1 beschreibt ein Verfahren und eine Übertragungsvorrichtung zur rückwirkungsfreien unidirektionalen Übertragung von Daten von einer ersten Netzwerkzone in eine zweite Netzwerkzone zur Auswertung an einen abgesetzten Anwendungsserver. Eine Unidirektionale Datenübertragungseinheit ist derart ausgebildet, die Daten im Transportdatenformat in die zweite Netzwerkzone (23) unidirektional zu übertragen.

### ZUSAMMENFASSUNG DER ERFINDUNG

Die Aufgabe der Erfindung besteht darin, eine Lösung zur Datenübertragung in Netzwerken anzugeben.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein Aspekt der Erfindung besteht darin, eine kostengünstige und sichere Lösung für ein Datennetzwerk bereitzustellen, um Daten aus einer Mehrzahl von Netzwerkzonen rückwirkungsfrei (unidirektional) mittels einem One-Way-Gateway zu übertragen.

Die Erfindung beansprucht ein Datennetzwerk für industrielle Anlagen,
gekennzeichnet durch:
   - mindestens eine erste Datenerfassungseinheit, die ausgebildet ist, von mindestens einer ihr zugeordneten Automatisierungsnetzwerkzone erzeugte erste Daten zu erfassen und als zweite Daten über eine Netzwerkverbindung zu übertragen, und
   - eine zweite Datenerfassungseinheit, die ausgebildet ist, die zweiten Daten zu sammeln,
wobei die Automatisierungsnetzwerkzone mindestens eine Automatisierungskomponente aufweist und
wobei die erste Datenerfassungseinheit und die zweite Datenerfassungseinheit zusammen ein One-Way-Gateway bilden.

Die Automatisierungsnetzwerkzone kann auch als Automatisierungsdomäne bezeichnet werden und beispielsweise als Fertigungszelle, Prozessautomatisierung, Bahnautomatisierung, Gebäudeautomatisierung, Verkehrssystemautomatisierung oder Energienetzautomatisierung ausgebildet sein.

Die Automatisierungskomponente kann beispielsweise als Fertigungsmaschine ausgebildet sein.

Das One-Way-Gateway kann auch als Einwegkommunikationsweg oder unidirektionaler Kommunikationsweg bezeichnet werden.

Die ersten Daten und zweiten Daten können beispielsweise Steuerdaten und/oder Diagnosedaten und/oder Sensordaten der Automatisierungskomponente sein.

Die erste Datenerfassungseinheit kann auch als Satellite Data Capture Unit (Satellite-DCU) bezeichnet werden. Die zweite Datenerfassungseinheit kann auch als Master Data Capture Unit (Master-DCU) bezeichnet werden.

Die erste Datenerfassungseinheit kann eine Vorverarbeitung der ersten Daten durchführen, bevor die vorverarbeiteten Daten als zweite Daten übertragen werden. Die Vorverarbeitung kann eine Filterung oder Kompression der ersten Daten sein. Von der ersten Datenerfassungseinheit kann ein Zeitstempel (als spezielle Art der Vor-Verarbeitung) an die ersten Daten/ zweiten Daten vergeben werden. Der Zeitstempel kann mit einer synchronisierten Zeit-Information, z.B. einer GPS-Zeit oder der Zeit-Information eines NTP-Servers, synchronisiert sein. Dies hat den Vorteil, dass erste Daten, die für eine Echtzeitkommunikation, z.B. Real-Time Ethernet oder Time Sensitive Networking, innerhalb der Automatisierungsnetzwerkzone mit einer lokalen Zeit synchronisiert sind, einer globalen Zeitinformation zugeordnet werden können. Weiterhin kann als Information an die ersten Daten/ zweiten Daten vergeben werden, die angibt, ob die ersten Daten während eines für die Übertragung von Echtzeitdaten reservierten Zeitslots übertragen wurden.

Es können mehrere erste Datenerfassungseinheiten an eine zweite Datenerfassungseinheit gekoppelt sein. Die zweite Datenerfassungseinheit/ Master-DCU kann dadurch die Funktion einer Zentrale einnehmen.

Der ersten Datenerfassungseinheit können mehrere Automatisierungsnetzwerkzonen zugeordnet sein.

Die Automatisierungsnetzwerkzonen können Unterzonen aufweisen, wobei die in den Unterzonen erzeugte erste Daten aggregiert werden können und aggregiert von der erste Datenerfassungseinheit erfasst werden.

Die Grundidee der Erfindung besteht darin, eine One-Way-Gateway-Lösung hierarchisch zu realisieren: Mehrere erste Datenerfassungseinheiten/ Satellite-DCUs werden eingesetzt, um Daten mehrerer Automatisierungsnetzwerkzonen rückwirkungsfrei zu erfassen und diese nachgelagert an eine zweite Datenerfassungseinheit/ Master-DCU zur weiteren Bearbeitung zu übertragen.

Dieses Konzept kann über mehrere Stufen hinweg fortgesetzt werden. D.h. Automatisierungsnetzwerkzonen ihrerseits können wiederum in Unterzonen unterteilt werden und Daten aus diesen über denselben Mechanismus aggregiert werden. Dies hat den Vorteil, dass mit wenig Aufwand erste Datenerfassungseinheiten/ Satelliten-DCUs bei einer Mehrzahl/Vielzahl von Automatisierungsnetzwerkzonen in hierarchischer Anordnung vorgesehen werden können. Jeder ersten Datenerfassungseinheit/ Satellite-DCU sind somit mehrere Automatisierungsnetzwerkzonen zugeordnet.

Die Erfindung bietet den Vorteil, dass Rohdaten aus den separaten Automatisierungsnetzwerkzonen über die Vorrichtung erfasst und kryptographisch geschützt (über einen sicheren Tunnel) an die zweite Datenerfassungseinheit/ Master-DCU gesendet und dort aggregiert werden können. Dadurch können die Mithördaten geschützt zur zweiten Datenerfassungseinheit/ Master-DCU übertragen werden. Es können je nach Anwendungsfall eine vorhandene Netzwerkinfrastruktur mitgenutzt werden oder eine separate Netzwerkinfrastruktur aufgebaut werden.

In einer weiteren Ausführung ist die erste Datenerfassungseinheit zur Verarbeitung der ersten Daten ausgebildet.

In einer weiteren Ausführung ist die zweite Datenerfassungseinheit zur Steuerung der ersten Datenerfassungseinheit ausgebildet.

In einer weiteren Ausführung bestimmt die Steuerung der ersten Datenerfassungseinheit durch die zweite Datenerfassungseinheit die Verarbeitung der ersten Daten durch die erste Datenerfassungseinheit.

Die Steuerung umfasst unter anderem auch die Verwaltung der ersten Datenerfassungseinheit. Das Verwalten betrifft Konfigurationsparameter, aber insbesondere Vorverarbeitungsanwendungen / (Daten-) Filteranwendungen auf den ersten Datenerfassungseinheiten/ Satelliten-DCUs.

In einer weiteren Ausführung beinhaltet die Steuerung der ersten Datenerfassungseinheit ein Konfigurieren der Erfassung der ersten Daten, ein Konfigurieren einer Aggregation der ersten Daten, ein Konfigurieren einer Vorverarbeitung der ersten Daten (zum Beispiel eine statistische Datenaufbereitung) und/ oder ein Konfigurieren einer Filterung (zum Beispiel nach z.B. Netzwerkadresse/ IP-Adresse, Protokoll) der ersten Daten.

Die ersten Datenerfassungseinheiten / Satelliten-DCUs müssen vorzugsweise nicht selbst konfiguriert werden, da sie von der zweiten Datenerfassungseinheit/ Master-DCU aus konfiguriert werden. Dadurch können weitere erste Datenerfassungseinheiten / Satellite-DCUs im laufenden Betrieb flexibel installiert werden.

Dadurch ist weiterhin eine einfache Anpassung an neue Angriffsmuster möglich.

In einer weiteren Ausführung nimmt die zweite Datenerfassungseinheit eine Datenbearbeitung und eine Filterung der zweiten Daten vor.

In einer weiteren Ausführung leitet die zweite Datenerfassungseinheit die gesammelten zweiten Daten an eine weitere Einheit weiter.

In einer weiteren Ausführung ist die weitere Einheit ein Backend-System oder ein Server.

Weiterhin erfolgt i.A. eine weitere Bearbeitung und Filterung auf der zweiten Datenerfassungseinheit/ Master-DCU, die die zweiten Daten dann an Backend-System/ Server weiterleiten kann. Auch können mehrstufig Daten gefiltert und aggregiert werden (d.h. es findet eine zellennahe (nahe der Automatisierungsnetzwerkzone) Vorverarbeitung statt; dabei sind die Übergänge rückwirkungsfrei umgesetzt). Diese Datenverdichtung ist v.a. für IoT- und/oder Cloud-Anbindungen vorteilhaft, da Kosten für Datenübertragung eingespart werden können.

In einer weiteren Ausführung überwacht die zweite Datenerfassungseinheit die Integrität (inkl. Verkabelung) der ersten Datenerfassungseinheit bzw. mehrerer ersten Datenerfassungseinheiten.

Dadurch kann unter anderem geschützt werden, dass die Gesamtinstallation integer ist. Insbesondere kann dadurch auch überwacht werden, dass die Installation der ersten Datenerfassungseinheiten/ DCUs nicht manipuliert wurde, sodass die Rückwirkungsfreiheit ggf. gefährdet wäre.

In einer weiteren Ausführung weist die erste Datenerfassungseinheit und die zweite Datenerfassungseinheit eine Einwegkommunikationseinheit auf.

Es erfolgt dabei für einen Nutzerdaten-Kommunikationspfad eine doppelte Durchsetzung der Einweg-KommunikationsEigenschaft/Einwegkommunikationseinheit, einmal auf der ersten Datenerfassungseinheit/ Satellite-DCU und einmal auf der zweiten Datenerfassungseinheit/ Master-DCU. Diese können technisch identisch realisiert sein.

In einer weiteren Ausführung ist die Einwegkommunikationseinheit an der ersten Datenerfassungseinheit logisch, softwarebasiert und/oder FPGA-basiert realisiert.

In einer weiteren Ausführung ist die Einwegkommunikationseinheit an der zweiten Datenerfassungseinheit hardwareunterstützt realisiert.

Vorzugsweise ist auf einer Seite, insbesondere der Satellite-DCU eine einfach umsetzbare Realisierung der Einweg-Kommunikations-Eigenschaft/Einwegkommunikationseinheit vorgesehen (z.B. eine logische, Software- oder FPGA-basierte Realisierung) und an der anderen Seite eine physikalische/hardware-unterstützte Realisierung (z.B. unter Nutzung einer physikalischen Einwegkommunikationswegs). Dadurch wird ein effizient realisierbarer doppelter Einweg-Schutz erreicht. Da technologisch unabhängige Realisierungen der Einweg-Eigenschaft realisiert sind, wird ein besonders hoher Schutz erreicht.

Es kann vorgesehen sein, dass eine spezielle Hardwareunterstützte Realisierung nur zentral (an der zweiten Datenerfassungseinheit/ Master-DCU) vorgesehen sein muss, wodurch Realisierungen der ersten Datenerfassungseinheit/ Satelliten-DCU besonders kostengünstig umgesetzt werden können.

In einer weiteren Ausführung weist die Netzwerkverbindung bidirektionale und/ oder unidirektionale Eigenschaften auf.

Die Verwaltung einer Einweg-Kommunikationseinrichtung erfordert eine bidirektionale Kommunikation zwischen der zweiten Datenerfassungseinheit/ Master-DCU und einer ersten Datenerfassungseinheit/ Satellite-DCU. Dennoch soll bezüglich mitgehörter Nutzerdaten nur eine Einwegkommunikation möglich sein.

Für die Verwaltung einer ersten Datenerfassungseinheit/Satellite-DCU durch die zweite Datenerfassungseinheit/Master-DCU kann eine bidirektionale Kommunikationsverbindung vorgesehen sein. Die erste Datenerfassungseinheit/Satellite-DCU stellt sicher, dass Verwaltungsdaten nur die erste Datenerfassungseinheit/Satellite-DCU selbst erreichen und von ihr bearbeitet werden, diese aber nicht in das interne Netzwerk (Automatisierungsnetzwerkzone) weitergleitet werden. Dadurch wird verhindert, dass über die bidirektionale Verbindung von der zweiten Datenerfassungseinheit/ Master-DCU zu der ersten Datenerfassungseinheit/Satellite-DCU Daten von der zweiten Datenerfassungseinheit/Master-DCU über die ersten Datenerfassungseinheiten/Satellite-DCUs in die Automatisierungsnetzwerkzone (z.B. Produktionszellen) eingeschleust werden können.

Dies kann z.B. dadurch erreicht werden, dass die interne Schnittstelle der ersten Datenerfassungseinheit/Satellite-DCU nur passiv lesen kann.

Dies kann in einer weiteren Variante dadurch erreicht werden, dass die Softwarekomponente der ersten Datenerfassungseinheit/Satellite-DCU zur Verwaltung der ersten Datenerfassungseinheiten keinen Zugriff auf die interne Netzwerkschnittstelle hat, sondern nur auf die externe Netzwerkschnittstelle. Dies kann z.B. auf einem Linux-basierten System durch SELinux erreicht werden.

Dies kann in einer weiteren Variante dadurch erfolgen, dass zwei separate Kommunikationskanäle (z.B. VLANs) zwischen der ersten Datenerfassungseinheit/Satellite-DCU und der zweiten Datenerfassungseinheit/Master-DCU verwendet werden, eines für das Management der ersten Datenerfassungseinheit/Satellite-DCU und eines für die Einwegübertragung von Nutzerdaten.

In einer anderen Variante ist dies zeitlich separiert (entweder Management oder Nutzerdatenübertragung). Vorzugsweise aktiviert eine erste Datenerfassungseinheit/Satellite-DCU auf der Schnittstelle zur zweiten Datenerfassungseinheit/ Master-DCU temporär nach einem Systemstart eine bidirektionale Kommunikationsverbindung zur zweiten Datenerfassungseinheit/ Master-DCU, um die Konfiguration abzufragen. Nach Empfang der Konfiguration wird der bidirektionale Betriebsmodus deaktiviert, sodass danach nur noch eine Einweg-Kommunikation von der ersten Datenerfassungseinheit/Satellite-DCU zur zweiten Datenerfassungseinheit/ Master-DCU möglich ist.

Die Erfindung beansprucht außerdem ein Verfahren für den Betrieb eines Datennetzwerks für industrielle Anlagen, gekennzeichnet durch die Schritte:
- ein Erzeugen von ersten Daten durch mindestens eine Automatisierungsnetzwerkzone, wobei die Automatisierungsnetzwerkzone mindestens eine Automatisierungskomponente aufweist,
- ein Erfassen der ersten Daten durch eine erste Datenerfassungseinheit, und
- ein Übertragen der ersten Daten als zweite Daten von der ersten Datenerfassungseinheit an eine zweite Datenerfassungseinheit über eine Netzwerkverbindung,
wobei die erste Datenerfassungseinheit und die zweite Datenerfassungseinheit zusammen ein One-Way-Gateway bilden.

In einer weiteren Ausführung kann das Verfahren mit dem erfindungsgemäßen Datennetzwerk ausgeführt werden.

Die Erfindung bietet die folgenden Vorteile:
- Sichere, strikt unidirektionale Anbindung von Automatisierungsnetzwerkzonen zum Beispiel von Industrieanlagen an IoT-Backendsysteme.
- Zugriff auf und Aggregation von Daten (zum Beispiel aus isolierten Teilsegmenten eines industriellen Anlagennetzes) zur lokalen Verdichtung, Filterung und/oder Analyse und einer Weiterleitung an ein IoT-Backendsystem.
- Einfache Realisierung der IoT-Backend-Anbindung (z.B. möglichst geringer Aufwand für Schlüsselmanagement zum Aufbau sicherer Verbindungen) unter Aufrechterhaltung des Sicherheits-/Schutzniveaus der Netze.
- Eine Einweg-Kommunikationseigenschaft kann in Automatisierungssystemen mit einer Mehrzahl bzw. Vielzahl von auf Netzwerkebene isolierten Automatisierungsnetzwerkzonen/Fertigungszellen praktikabel realisiert werden.
- Es kann ohne Gefährdung eines zuverlässigen Betriebs installiert werden, da weder das zelleninterne Netzwerk noch das Fabriknetz beeinflusst werden. Dadurch kann es auch nicht zu einer Beeinflussung der Kommunikation zwischen Automatisierungsnetzwerkzonen/Fertigungszellen über das Fabriknetzwerk kommen.
- Wesentliche Security-Use Cases, wie der Aufbau zentraler Logdatenspeicher und/oder Network-Monitoringsysteme zur Integritätsüberwachung lassen sich hierdurch ohne negative Beeinflussung des Risikolevels für die Anlage kostengünstig umsetzen.
- Ein weiterer wesentlicher Vorteil dieser Umsetzung ist, dass Schlüsselmaterial für eine Anbindung an IoT-Backendsysteme nur an dedizierten Master-DCUs/ zweiten Datenerfassungseinheiten verwaltet werden muss. Dies reduziert den Managementaufwand und bietet gute Skalierung.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand von schematischen Zeichnungen ersichtlich.

Es zeigen
- Fig. 1: ein Datennetzwerk,
- Fig. 2: ein Netzwerk mit einem Datennetzwerk mit zwei ersten Datenerfassungseinheiten und
- Fig. 3: ein Ablaufdiagramm.

### DETAILLIERTE BESCHREIBUNG DER ERFINDUNG

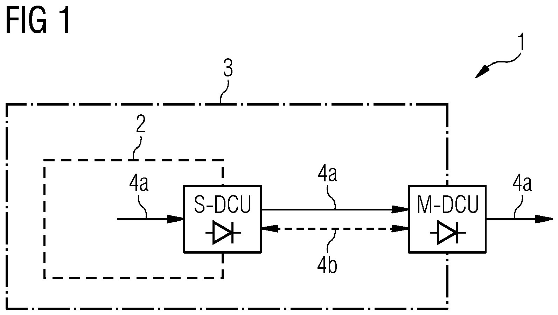

Fig. 1 zeigt ein Datennetzwerk 1 für industrielle Anlagen.

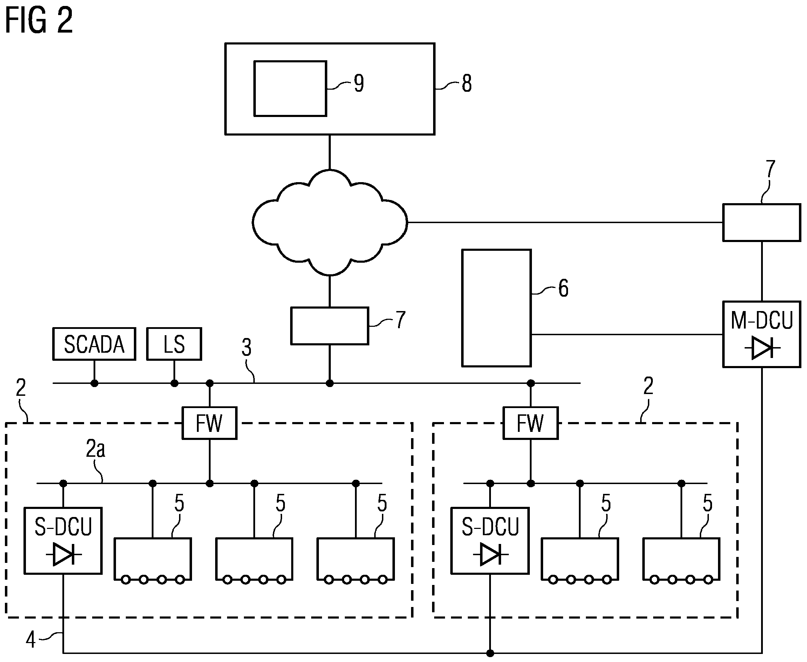

Das Datennetzwerk 1 ist gekennzeichnet durch:
- mindestens eine erste Datenerfassungseinheit S-DCU, die ausgebildet ist, von mindestens einer ihr zugeordneten Automatisierungsnetzwerkzone 2 erzeugte erste Daten zu erfassen und als zweite Daten über eine Netzwerkverbindung 4 zu übertragen, und
- eine zweite Datenerfassungseinheit M-DCU, die ausgebildet ist, die zweiten Daten zu sammeln,

wobei die Automatisierungsnetzwerkzone 2 mindestens eine Automatisierungskomponente 5 (nur in Fig. 2 dargestellt) aufweist und
wobei die erste Datenerfassungseinheit S-DCU und die zweite Datenerfassungseinheit M-DCU zusammen ein One-Way-Gateway bilden. Dadurch wird erreicht, dass eine Beeinflussung des Automatisierungssystems der Automatisierungsnetzwerkzone 2 von einem externen Netzwerk, d.h. rechts von der zweite Datenerfassungseinheit M-DCU, verhindert wird. Es wird somit eine Rückwirkungsfreiheit gewährleistet (freedom of interference).

Die Automatisierungsnetzwerkzone 2 ist in ein höhergeordnetes Netzwerk 3, zum Beispiel ein Fabriknetzwerk 3 oder ein industrielles Netzwerk 3 eingebunden.

Das One-Way-Gateway kann auch als Einwegkommunikationsweg oder unidirektionaler Kommunikationsweg bezeichnet werden.

Die Grundidee der Erfindung besteht darin, eine One-Way-Gateway-Lösung hierarchisch zu realisieren: Mehrere erste Datenerfassungseinheiten S-DCUs/ Satellite-DCUs S-DCUs werden eingesetzt, um Daten mehrerer Automatisierungsnetzwerkzonen 2 rückwirkungsfrei zu erfassen und diese nachgelagert an eine zweite Datenerfassungseinheit M-DCU/ Master-DCU M-DCU zur weiteren Bearbeitung zu übertragen.

Dieses Konzept kann über mehrere Stufen hinweg fortgesetzt werden. D.h. Automatisierungsnetzwerkzonen 2 ihrerseits können wiederum in Unterzonen unterteilt werden und Daten aus diesen über denselben Mechanismus aggregiert werden. Dies hat den Vorteil, dass mit wenig Aufwand erste Datenerfassungseinheiten S-DCUs/ Satelliten-DCUs S-DCUs bei einer Mehrzahl/Vielzahl von Automatisierungsnetzwerkzonen 2 in hierarchischer Anordnung vorgesehen werden können. Jeder ersten Datenerfassungseinheit S-DCU/ Satellite-DCU S-DCU sind somit mehrere Automatisierungsnetzwerkzonen 2 zugeordnet.

Die Verwaltung einer Einweg-Kommunikationseinrichtung erfordert eine bidirektionale Kommunikation 4b zwischen der zweiten Datenerfassungseinheit M-DCU/ Master-DCU M-DCU und einer ersten Datenerfassungseinheit S-DCU/Satellite-DCU S-DCU. Dennoch soll bezüglich mitgehörter Nutzerdaten nur eine Einweg-kommunikation 4a möglich sein.

Für die Verwaltung einer ersten Datenerfassungseinheit S-DCU/Satellite-DCU S-DCU durch die zweite Datenerfassungseinheit M-DCU/ Master-DCU M-DCU kann eine bidirektionale Kommunikationsverbindung 4b vorgesehen sein. Die erste Datenerfassungseinheit S-DCU/ Satellite-DCU S-DCU stellt sicher, dass die Verwaltungsdaten nur die erste Datenerfassungseinheit S-DCU/Satellite-DCU S-DCU selbst erreichen und von ihr bearbeitet werden, diese aber nicht in das interne Netzwerk 2 (Automatisierungsnetzwerkzone 2) weitergleitet werden. Dadurch wird verhindert, dass über die bidirektionale Verbindung 4b von der zweiten Datenerfassungseinheit M-DCU/Master-DCU M-DCU zu der ersten Datenerfassungseinheit S-DCU / Satellite-DCU S-DCU Daten von der zweiten Datenerfassungseinheit M-DCU / Master-DCU M-DCU über die ersten Datenerfassungseinheiten S-DCU / Satellite-DCUs S-DCU in die Automatisierungsnetzwerkzone 2 (z.B. Produktionszellen) eingeschleust werden können.

Dies kann z.B. dadurch erreicht werden, dass die interne Schnittstelle der ersten Datenerfassungseinheit S-DCU/ Satellite-DCU S-DCU nur passiv lesen kann.

Dies kann in einer weiteren Variante dadurch erreicht werden, dass die Softwarekomponente der ersten Datenerfassungseinheit S-DCU/ Satellite-DCU S-DCU zur Verwaltung der ersten Datenerfassungseinheiten S-DCUs keinen Zugriff auf die interne Netzwerkschnittstelle hat, sondern nur auf die externe Netzwerkschnittstelle. Dies kann z.B. auf einem Linux-basierten System durch SELinux erreicht werden.

Dies erfolgt in einer anderen Variante dadurch, dass zwei separate Kommunikationskanäle (z.B. VLANs) zwischen der ersten Datenerfassungseinheit S-DCU/ Satellite-DCU S-DCU und der zweiten Datenerfassungseinheit M-DCU/ Master-DCU M-DCU verwendet werden, eines für das Management der ersten Datenerfassungseinheit S-DCU/ Satellite-DCU S-DCU und eines für die Einwegübertragung von Nutzerdaten.

In einer anderen Variante ist dies zeitlich separiert (entweder Management oder Nutzerdatenübertragung). Vorzugsweise aktiviert eine erste Datenerfassungseinheit S-DCU / Satellite-DCU S-DCU auf der Schnittstelle zur zweiten Datenerfassungseinheit M-DCU / Master-DCU M-DCU temporär nach einem Systemstart eine bidirektionale Kommunikationsverbindung 4b zur zweiten Datenerfassungseinheit M-DCU/ Master-DCU M-DCU, um die Konfiguration abzufragen. Nach Empfang der Konfiguration wird der bidirektionale Betriebsmodus deaktiviert, sodass danach nur noch eine Einweg-Kommunikation von der ersten Datenerfassungseinheit S-DCU / Satellite-DCU S-DCU zur zweiten Datenerfassungseinheit M-DCU/ Master-DCU M-DCU möglich ist.

Fig. 2 zeigt eine Realisierung mit zwei Automatisierungsnetzwerkzonen 2/ Fertigungszellen 2 in jeweils einem Zellennetzwerk 2a (Production Cell Network 2a). Eine Automatisierungsnetzwerkzone 2/ Fertigungszelle 2 kann z.B. für eine einzelne Automatisierungskomponente 5, zum Beispiel eine Maschine 5 vorgesehen sein (z.B. eine Fräsmaschine mit Steuerung), oder für einen Teilbereich einer Fertigungsstraße (z.B. ein Band von mehreren Bändern einer Fabrik). Die Zellennetzwerke 2a sind jeweils über Firewalls FW mit einem höhergeordnetem Netzwerk 3 zum Beispiel einem Fabriknetzwerk 3 (Plant Network 3) verbunden. Dadurch ist die zelleninterne Datenkommunikation (Steuerungsdaten der Fertigungszelle 2) nicht am Fabriknetz 3 mithörbar. Das Fabriknetzwerk 3 weist ein Supervisory Control and Data Acquisition SCADA System und einen Log Server LS auf.

Daher sind in den einzelnen Zellennetzwerken 2a erste Datenerfassungseinheiten / Satelliten-DCUs S-DCU vorgesehen, die als Einweg-Schnittstelle die Datenkommunikation der Automatisierungsnetzwerkzone 2 / Fertigungszelle 2 mithören und über eine unidirektionale Netzwerkverbindung 4a / ein Einweg-Monitorings-Netzwerk 4a die mitgehörten Daten einer zweiten Datenerfassungseinheit / Master-DCU M-DCU bereitstellen. Dort kann dann zentral durch eine lokale (on-premises) Systemintegritätsüberwachung 6 die Integrität der Mehrzahl von Automatisierungsnetzwerkzonen 2 / Fertigungszellen 2 überwacht werden. Weiterhin können die Zellenintegritätsüberwachungsdaten über ein IoT-Gateway 7 an ein IoT-Backend 8 mit einem Backend-System 9 (zum Beispiel ein Backend System Integrity Monitoring Service 9) weitergeleitet werden. Auch ist es möglich (nicht dargestellt), die Integritätsüberwachungsdaten einer Blockketten-Infrastruktur (Blockchain, Distributed Ledger) bereitzustellen.

Im dargestellten Realisierungsbeispiel ist ein separates Einweg-Monitorings-Netzwerk vorgesehen. Dies kann z.B. als Ethernet, über Lichtwellenleiter oder als Funknetzwerk (WLAN, WiMax, 5G Mobilfunk) realisiert sein. Es ist jedoch auch möglich, dieses Netzwerk als virtuelles Netzwerk zu realisieren, z.B. als ein separates Network Slice eines 5G-Mobilfunknetzwerks, oder über ein VLAN (virtual LAN) oder Software Defined Network, auf Basis derselben Basis-Netzwerkinfrastruktur wie das Fabriknetzwerk.

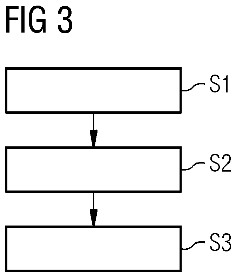

Fig. 3 zeigt ein Ablaufdiagramm eines Verfahrens für den Betrieb eines Datennetzwerks für industrielle Anlagen, gekennzeichnet durch die Schritte:
- erster Schritt S1: Ein Erzeugen von ersten Daten durch mindestens eine Automatisierungsnetzwerkzone, wobei die Automatisierungsnetzwerkzone mindestens eine Automatisierungskomponente aufweist,
- zweiter Schritt S2: Ein Erfassen der ersten Daten durch eine erste Datenerfassungseinheit, und
- dritter Schritt S3: Ein Übertragen der ersten Daten als zweite Daten von der ersten Datenerfassungseinheit an eine zweite Datenerfassungseinheit über eine Netzwerkverbindung, wobei die erste Datenerfassungseinheit und die zweite Datenerfassungseinheit zusammen ein One-Way-Gateway bilden.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: Datennetzwerk
- 2: Automatisierungsnetzwerkzone/ Fertigungszelle
- 2a: Zellennetzwerk/ Production Cell Network
- 3: höhergeordnetes Netzwerk/ Fabriknetzwerk
- 4: Netzwerkverbindung
- 4a: unidirektionale Netzwerkverbindung
- 4b: bidirektionale Netzwerkverbindung
- 5: Automatisierungskomponente/ Maschine
- 6: Systemintegritätsüberwachung
- 7: IoT-Gateway
- 8: IoT-Backend
- 9: Backend-System

- FW: Firewall
- LS: Log Server
- M-DCU: zweite Datenerfassungseinheit/ Master-DCU
- SCADA: Supervisory Control and Data Acquisition
- S-DCU: erste Datenerfassungseinheit/ Satellite-DCUs
- S1: erster Schritt
- S2: zweiter Schritt
- S3: dritter Schritt

## Patentansprüche

1. Datennetzwerk (1) für industrielle Anlagen,
- mindestens eine erste Datenerfassungseinheit (S-DCU), die ausgebildet ist, von mindestens einer ihr zugeordneten Automatisierungsnetzwerkzone (2) erzeugte erste Daten zu erfassen und als zweite Daten über eine Netzwerkverbindung (4) zu übertragen, außerdem zur Verarbeitung der ersten Daten ausgebildet und
- eine zweite Datenerfassungseinheit (M-DCU), die ausgebildet ist, die zweiten Daten zu sammeln,
wobei die Automatisierungsnetzwerkzone (2) mindestens eine Automatisierungskomponente (5) aufweist und
wobei die erste Datenerfassungseinheit (S-DCU) und die zweite Datenerfassungseinheit (M-DCU) zusammen ein One-Way-Gateway bilden
**dadurch gekennzeichnet, dass**:
- die zweite Datenerfassungseinheit (M-DCU) zur Steuerung der ersten Datenerfassungseinheit ausgebildet ist, und
die Steuerung der ersten Datenerfassungseinheit (S-DCU) durch die zweite Datenerfassungseinheit (M-DCU) die Verarbeitung der ersten Daten durch die erste Datenerfassungseinheit (S-DCU) bestimmt.

2. Datennetzwerk (1) nach Anspruch 1,
**dadurch gekennzeichnet,**
**dass** die Steuerung der ersten Datenerfassungseinheit (S-DCU) ein Konfigurieren der Erfassung der ersten Daten, ein Konfigurieren einer Aggregation der ersten Daten, ein Konfigurieren einer Vorverarbeitung der ersten Daten und/ oder ein Konfigurieren einer Filterung der ersten Daten beinhaltet.

3. Datennetzwerk (1) nach einem der vorherigen Ansprüche,
**dadurch gekennzeichnet,**
**dass** die zweite Datenerfassungseinheit (M-DCU) eine Datenbearbeitung und eine Filterung der zweiten Daten vornimmt.

4. Datennetzwerk (1) nach einem der vorherigen Ansprüche,
**dadurch gekennzeichnet,**
**dass** die zweite Datenerfassungseinheit (M-DCU) die Integrität der ersten Datenerfassungseinheit (S-DCU) überwacht.

5. Datennetzwerk (1) nach einem der vorherigen Ansprüche,
**dadurch gekennzeichnet,**
**dass** die zweite Datenerfassungseinheit (M-DCU) die gesammelten zweiten Daten an eine weitere Einheit weiterleitet.

6. Datennetzwerk (1) nach Anspruch 5,
**dadurch gekennzeichnet,**
**dass** die weitere Einheit ein Backend-System (9) oder ein Server ist.

7. Datennetzwerk (1) nach einem der vorherigen Ansprüche,
**dadurch gekennzeichnet,**
**dass** die erste Datenerfassungseinheit (S-DCU) und die zweite Datenerfassungseinheit (M-DCU) eine Einwegkommunikationseinheit aufweisen.

8. Datennetzwerk (1) nach einem der vorherigen Ansprüche,
**dadurch gekennzeichnet,**
**dass** die Einwegkommunikationseinheit an der ersten Datenerfassungseinheit (S-DCU) logisch, softwarebasiert und/ oder FPGA-basiert realisiert ist.

9. Datennetzwerk (1) nach einem der vorherigen Ansprüche,
**dadurch gekennzeichnet,**
**dass** die Einwegkommunikationseinheit an der zweiten Datenerfassungseinheit (M-DCU) hardwareunterstützt realisiert ist.

10. Datennetzwerk (1) nach einem der vorherigen Ansprüche,
**dadurch gekennzeichnet,**
**dass** die Netzwerkverbindung (4) bidirektionale (4b) und/ oder unidirektionale Eigenschaften (4a) aufweist.

11. Verfahren für den Betrieb eines Datennetzwerks (1) für industrielle Anlagen,
aufweisend die Schritte:
- ein Erzeugen (S1) von ersten Daten durch mindestens eine Automatisierungsnetzwerkzone (2), wobei die Automatisierungsnetzwerkzone (2) mindestens eine Automatisierungskomponente (5) aufweist,
- ein Erfassen (S2) der ersten Daten durch eine erste Datenerfassungseinheit (S-DCU), und
- ein Übertragen der ersten Daten als zweite Daten von der ersten Datenerfassungseinheit (S-DCU) an eine zweite Datenerfassungseinheit (M-DCU) über eine Netzwerkverbindung (4), wobei die erste Datenerfassungseinheit (S-DCU) und die zweite Datenerfassungseinheit (M-DCU) zusammen ein One-Way-Gateway bilden,
**gekennzeichnet durch**:
- Ein Bestimmen einer Steuerung der ersten Datenerfassungseinheit (S-DCU) durch die zweite Datenerfassungseinheit (M-DCU) bezüglich einer Verarbeitung der ersten Daten durch die erste Datenerfassungseinheit (S-DCU).

12. Verfahren nach Anspruch 11 ausgeführt durch ein Datennetzwerk (1) nach einem der Ansprüche 1 bis 10.

## Claims

1. Data network (1) for industrial installations,
- at least one first data capture unit (S-DCU) that is designed to capture first data generated by at least one automation network zone (2) assigned thereto and to transmit said first data over a network connection (4) as second data, also designed to process the first data, and
- a second data capture unit (M-DCU) that is designed to collect the second data,
wherein the automation network zone (2) has at least one automation component (5) and
wherein the first data capture unit (S-DCU) and the second data capture unit (M-DCU) together form a one-way gateway,
**characterized in that**:
- the second data capture unit (M-DCU) is designed to control the first data capture unit, and the controlling of the first data capture unit (S-DCU) by the second data capture unit (M-DCU) determines the processing of the first data performed by the first data capture unit (S-DCU).

2. Data network (1) according to Claim 1,
**characterized**
**in that** the controlling of the first data capture unit (S-DCU) comprises configuring the capture of the first data, configuring aggregation of the first data, configuring preprocessing of the first data and/or configuring filtering of the first data.

3. Data network (1) according to either of the preceding claims,
**characterized**
**in that** the second data capture unit (M-DCU) carries out data processing and filtering of the second data.

4. Data network (1) according to one of the preceding claims,
**characterized**
**in that** the second data capture unit (M-DCU) monitors the integrity of the first data capture unit (S-DCU).

5. Data network (1) according to one of the preceding claims,
**characterized**
**in that** the second data capture unit (M-DCU) forwards the collected second data to a further unit.

6. Data network (1) according to Claim 5,
**characterized**
**in that** the further unit is a back-end system (9) or a server.

7. Data network (1) according to one of the preceding claims,
**characterized**
**in that** the first data capture unit (S-DCU) and the second data capture unit (M-DCU) have a one-way communication unit.

8. Data network (1) according to one of the preceding claims,
**characterized**
**in that** the one-way communication unit, at the first data capture unit (S-DCU), is implemented in logic form, in software-based form and/or in FPGA-based form.

9. Data network (1) according to one of the preceding claims,
**characterized**
**in that** the one-way communication unit, at the second data capture unit (M-DCU), is implemented in hardware-aided form.

10. Data network (1) according to one of the preceding claims,
**characterized**
**in that** the network connection (4) has bidirectional properties (4b) and/or unidirectional properties (4a).

11. Method for operating a data network (1) for industrial installations,
comprising the following steps:
- at least one automation network zone (2) generates (S1) first data, wherein the automation network zone (2) has at least one automation component (5),
- a first data capture unit (S-DCU) captures (S2) the first data, and
- the first data are transmitted from the first data capture unit (S-DCU) to a second data capture unit (M-DCU) over a network connection (4) as second data, wherein the first data capture unit (S-DCU) and the second data capture unit (M-DCU) together form a one-way gateway,
**characterized by**:
- the second data capture unit (M-DCU) determines controlling of the first data capture unit (S-DCU) with regard to processing of the first data performed by the first data capture unit (S-DCU).

12. Method according to Claim 11, carried out by a data network (1) according to one of claims 1 to 10.

## Revendications

1. Réseau de données (1) pour installations industrielles, comprenant
- au moins une première unité de saisie de données (S-DCU) qui est conçue pour saisir des premières données produites par au moins une zone de réseau d'automatisation (2) qui lui est associée et les transférer en tant que secondes données par le biais d'une liaison de réseau (4), et est conçue en outre pour le traitement des premières données, et
- une seconde unité de saisie de données (M-DCU) qui est conçue pour collecter les secondes données,
la zone de réseau d'automatisation (2) comprenant au moins un composant d'automatisation (5) et
la première unité de saisie de données (S-DCU) et la seconde unité de saisie de données (M-DCU) formant ensemble une passerelle unidirectionnelle,
**caractérisé en ce que** :
- la seconde unité de saisie de données (M-DCU) est conçue pour commander la première unité de saisie de données, et
la commande de la première unité de saisie de données (S-DCU) par la seconde unité de saisie de données (M-DCU) détermine le traitement des premières données par la première unité de saisie de données (S-DCU).

2. Réseau de données (1) selon la revendication 1,
**caractérisé**
**en ce que** la commande de la première unité de saisie de données (S-DCU) comprend une configuration de la saisie des premières données, une configuration d'une agrégation des premières données, une configuration d'un prétraitement des premières données et/ou une configuration d'un filtrage des premières données.

3. Réseau de données (1) selon l'une des revendications précédentes,
**caractérisé**
**en ce que** la seconde unité de saisie de données (M-DCU) procède à un traitement de données et à un filtrage des secondes données.

4. Réseau de données (1) selon l'une des revendications précédentes,
**caractérisé**
**en ce que** la seconde unité de saisie de données (M-DCU) surveille l'intégrité de la première unité de saisie de données (S-DCU).

5. Réseau de données (1) selon l'une des revendications précédentes,
**caractérisé**
**en ce que** la seconde unité de saisie de données (M-DCU) transmet les secondes données collectées à une autre unité.

6. Réseau de données (1) selon la revendication 5,
**caractérisé**
**en ce que** l'autre unité est un système d'arrière-plan (9) ou un serveur.

7. Réseau de données (1) selon l'une des revendications précédentes,
**caractérisé**
**en ce que** la première unité de saisie de données (S-DCU) et la seconde unité de saisie de données (M-DCU) comprennent une unité de communication unidirectionnelle.

8. Réseau de données (1) selon l'une des revendications précédentes,
**caractérisé**
**en ce que** l'unité de communication unidirectionnelle est réalisée au niveau de la première unité de saisie de données (S-DCU) d'une manière logique, basée sur logiciel et/ou basée sur FPGA.

9. Réseau de données (1) selon l'une des revendications précédentes,
**caractérisé**
**en ce que** l'unité de communication unidirectionnelle est réalisée au niveau de la seconde unité de saisie de données (M-DCU) d'une manière supportée par matériel.

10. Réseau de données (1) selon l'une des revendications précédentes,
**caractérisé**
**en ce que** la connexion réseau (4) a des propriétés bidirectionnelles (4b) et/ou unidirectionnelles (4a).

11. Procédé pour l'exploitation d'un réseau de données (1) pour installations industrielles, comprenant les étapes :
- production (S1) de premières données par au moins une zone de réseau d'automatisation (2), la zone de réseau d'automatisation (2) comprenant au moins une composante d'automatisation (5),
- saisie (S2) des premières données par une première unité de saisie de données (S-DCU), et
- transfert des premières données en tant que secondes données de la première unité de saisie de données (S-DCU) à une seconde unité de saisie de données (M-DCU) par le biais d'une liaison de réseau (4), la première unité de saisie de données (S-DCU) et la seconde unité de saisie de données (M-DCU) formant, ensemble, une passerelle unidirectionnelle,
**caractérisé par** :
- une détermination d'une commande de la première unité de saisie de données (S-DCU) par la seconde unité de saisie de données (M-DCU) par rapport à un traitement des premières données par la première unité de saisie de données (S-DCU).

12. Procédé selon la revendication 11 exécuté par un réseau de données (1) selon l'une des revendications 1 à 10.
